# EUROPEAN PATENT APPLICATION

(11) **EP 4 266 598 A1**
(43) Date of publication of application: **25.10.2023**
(21) Application number: 23169289.8
(22) Date of filing: 21.04.2023
(51) Int. Cl.: H04B 7/185, H04W 28/02, H04W 48/18

(54) **METHOD FOR SETTING UP AND OPTIMIZING MOBILE INTERNET CONNECTIONS, MONITORING MOBILE INTERNET CONNECTIONS, AND PROVIDING DETAILS ABOUT A USAGE AND COSTS OF MOBILE INTERNET CONNECTIONS**

(30) Priority: 21.04.2022 US 202217726298
(71) Applicant: Ivent Mobile B.V., 1251 MA Laren (NL)
(72) Inventor: Begeer, Carel Rutger Bastiaan, 1251 MA LAREN (NL); Mink, Kees Jan, 1251 MA LAREN (NL); Wong, Lee Han, 1251 MA LAREN (NL)
(74) Representative: Patent Business B.V.

(57) **Abstract**

A device adapted to provide an optimized internet connection while moving along a trajectory, comprising a computer-readable storage medium having computer-readable program code comprising executable operations embodied therewith, the device comprising a processor, preferably a microprocessor, coupled to the computer-readable storage medium, and wherein responsive to executing the computer-readable program code, the processor is configured to perform the executable operations comprising receiving data about a position concerning the device, providing position data, and receiving data about a quality of at least one communication network for connecting the device to Internet, providing network data, and receiving data about the trajectory, including a destination, providing trajectory data, and processing the position data, the network data, and the trajectory data, into a connection function, and optimizing the connection function, and based on an optimized connection function, providing the optimized internet connection.

## Description

### Field of the invention

The invention relates to a device, a server system, system, a computer program product, and a method for setting up and optimizing mobile internet connections, monitoring mobile internet connections, and providing details about a usage and costs of mobile internet connections.

### Background of the invention

Nowadays an internet connection is demanded anywhere, anytime. Mobile devices such as mobile phones, satellites phones, 3G/4G and 5G routers allow users to connect almost from any location on earth. Private use and business use require a reliable broadband internet connection. Often such an internet connection also needs to supply a high throughput for applications such as live streaming and (video) conferencing. Although there might be many options available it can be very difficult to setup a mobile internet connection which satisfies the needs of the user and is cost efficient.

In particular, there is a need in the art for improved methods and systems for setting up and optimizing mobile internet connections, monitoring mobile internet connections, and providing details about a usage and costs of mobile internet connections.

EP3979160A1, with title "Method and system for identifying an optimised internet connectivity configuration", according to its abstract states: "There is provided a system and methods for identifying an optimised internet connectivity configuration. The system comprises a processing module configured to process received data and a processor that calculates outcome values for each of a plurality of indicators associated with in-flight internet connectivity. Each outcome value is calculated using received data, a trained machine learning model, and a set of features associated with the corresponding indicator. The calculated set of outcome values are used to identify a recommended one of a number of internet connectivity configurations that are each associated with a characteristic set of outcome values."

US20210160159A1, with title "Aggregation of select network traffic statistics", according to its abstract describes "Disclosed herein are network appliances, methods, computer-readable media, and systems for aggregating network traffic statistics in a communication network. For example, the network appliance is to receive a SYN network packet; store header information from the SYN network packet in a flow data table; for each of the data packets related to the SYN network packet, store header information of the data packets in the flow table; after a predetermined amount of time or a predetermined number of rows is reached, invoke an eviction policy on the flow data table, wherein the eviction policy removes the related data packets from the flow data table; and populate an accumulating map with the flow data table."

US8831565B2, with title "Position-based control of access to alternative communication networks", according to its abstract describes "A system and method for determining, based at least in part on communication device position, whether access to an alternative communication network is authorized. Various aspects of the present invention may, for example and without limitation, comprise determining a position of a mobile communication device serviced by a communication network; determining, based at least in part on the determined position of the mobile communication device, whether the mobile communication device is authorized to access an alternative communication network; and communicating information regarding said determined authorization."

US20090186611A1, with title "Aircraft broadband wireless system and methods", according to its abstract describes "A broadband wireless system includes a plurality of spaced-apart ground stations for transmitting and receiving signals to and from a respective plurality of aircraft. Each of the plurality of ground stations may include a ground station transceiver including a ground station antenna carried by a mechanically steered platform, a ground station router in communication with the ground station transceiver, and a ground station beacon transceiver in communication with the ground station router. An aircraft transceiver may be carried by each of the plurality of aircraft to be positioned in communication with one of the plurality of ground stations. The aircraft transceiver may include an aircraft antenna mounted to the aircraft, an aircraft transceiver carried by the aircraft and in communication with the aircraft antenna, and an aircraft radio transceiver carried by the aircraft and in communication with the aircraft beacon transceiver. The broadband wireless system may also include a network operations center in communication with each of the ground stations via a global communications network. A ground station transceiver may transmit signals to and receives signals from not more than one aircraft at a time and ground station antenna may track the aircraft with which it is in communication."

### Summary of the invention

The embodiments in this application aim to address problems related to establishing a good internet connection, at affordable costs, while travelling.

When travelling from A to B often various alternative routes are available. And, on the way multiple service providers may offer a variety of wireless internet connections through Wi-Fi, cellular radio (such as 4G and 5G), satellite systems and other wireless networks. Each type of internet connection has its own characteristics and quality of service (QoS). For various applications, characteristics such a network latency, throughput and stability may differ. For example, chat applications may favor latency and stability over throughput, while media (audio/video) streaming applications often require high throughput and stability, and mail- and internet browser applications can be run with medium throughput and less stable connections. Setting up and utilize a mobile internet connection are subject to costs which depend on the type of network and service provider. Often these costs are aggregated and not, at all, transparent to the end user of an internet connection. Costs can, beyond the net usage of bandwidth, comprise other components such as setup connection costs, overhead network costs (e.g., communication protocol and retransmits), cross network costs, and location charges. The costs often incur high bills which may come as an (unpleasant) surprise for clients of internet service providers (ISP). In particular, when due to lack of transparency or information gathering, even an ISP cannot detail to its customers how the internet usage has resulted in its charges. An ISP may use a communications service provider (CSP) -for instance a satellite provider- which charges are often hidden for the end user. Therefore, establishing the optimal or most optimum mobile internet connection is not a trivial task. The embodiments in this application provide a better insight in the factors which determine the QoS and costs of a mobile internet connection. This allows the ISP to provide better connection services to their clients/end users and improve billing. This allows end users to better control their mobile internet connections while travelling and adjust the QoS and costs to their needs.

For example, location and connectivity providers onboard of an airplane can be important when providing high quality internet services during a flight. Imagine flying from Amsterdam to New York and a flight plan has shifted a little bit too much to the north. The airplane ends up flying outside of a satellite coverage or just on the edge of a satellite coverage then internet services will probably not optimal, if available at all. To optimize an internet connection, an adjusted flight plan -more to the south- would provide better satellite coverage. Similar, changing to another satellite provider that can provide more robust connections in an area can improve and contribute to optimize an internet connection onboard of the airplane.

Hence, it is an aspect of the invention to provide an improved and/or alternative method to collect data concerning mobile internet connections and to optimize internet connections.

To that end, there is provided a device adapted to provide an optimized internet connection while moving along a trajectory, comprising:
- a computer-readable storage medium having computer-readable program code comprising executable operations embodied therewith;
- a processor, preferably a microprocessor, coupled to the computer-readable storage medium, and
wherein responsive to executing the computer-readable program code, the processor is configured to perform the executable operations comprising:
- receiving data about a position concerning the device, providing position data;
- receiving data about a quality of at least one communication network for connecting the device to Internet, providing network data;
- receiving data about the trajectory, including a destination, providing trajectory data;
- processing the position data, the network data, and the trajectory data, into a connection function;
- optimizing the connection function, and
- based on an optimized connection function, providing the optimized internet connection.

A trajectory is connecting a start location and a destination location.

A position includes a location of a device and may include one or more angles of inclination, in particular an angle of inclination towards an earth's surface.

A device can be part or within a vehicle. Examples of a vehicle are an automobile, a cart, a train, a ship/boat, a vessel, a submarine, an airplane, a helicopter or drone (UAV).

To that end there is further provided a device, wherein the device is included in a vehicle having the trajectory, and the vehicle provides vehicle data, and the processing also comprises processing the vehicle data.

Vehicle data are data and measurements from a vehicle including metrics related to the vehicle (e.g., location, position, speed, acceleration, route planning) and metrics detected by the vehicle (e.g., atmospheric conditions, data from radar, lidar and camera images, other sensors)

There is further provided a device, wherein the device is providing a series of optimized internet connections through a plurality of low orbit and/or medium orbit satellites.

Low orbit and/or medium orbit satellites orbit the Earth below geostationary orbit; they have orbital periods less than 24 hours so that they are not synchronous with the Earth's rotation. In general, low orbit (or low Earth orbit, LEO) satellites orbit at an altitude below about 2,000km above mean sea level, and medium orbit (or medium Earth Orbit, MEO) satellites orbit in the region between low orbit and geostationary satellites, between about 2,000km and 35,800km above mean sea level.

There is further provided a device, wherein the at least one communication network for connecting the device to Internet comprises at least one of a satellite network, a cellular radio network (e.g. 4G, 5G or next generation), a Wi-Fi network, and a combination thereof.

There is further provided a device, wherein the executable operations also comprise receiving data about costs of using the at least one communication network for connecting the device to Internet, providing billing data, and the processing also comprises processing the billing data.

An optimized internet connection can depend on various preferences, such as related to costs, application usage, bandwidth, throughput, stability, and availability.

To that end, there is further provided a device, wherein the executable operations also comprise receiving data about internet connection preferences, providing preference data, and the processing also comprises processing the preference data.

There is further provided a device, wherein the executable operations also comprise receiving data about internet usage of at least one client device that is operational coupled to the device, providing usage data, and the processing also comprises processing the usage data.

There is further provided a device, wherein the executable operations also comprise receiving data about at least one application using an internet connection and running on at least one client device that is operational coupled to the device, providing application data, and the processing also comprises processing the application data.

Atmospheric conditions, including weather, may be part of establishing a good mobile internet connection.

To that end, there is further provided a device, wherein the executable operations also comprise receiving data about atmospheric conditions along the trajectory, providing atmospheric data, and the processing also comprises processing the atmospheric data.

There is further provided a device, that further is configured to connect to at least one internet service provider, wherein the processor is configured to perform executable operations comprising retrieving connection information from the at least one internet service provider, the connection information comprising in particular information about a quality of internet service and/or cost of internet service provided by the at least one internet service provider, and further processing this retrieved connection information into the connection function.

There is further provided a device, wherein the position data comprises at least one of a height above an earth's surface, a change of height above the earth's surface, geographical position, change of geographical positions, and a combination thereof.

There is further provided a device, wherein the optimizing comprises establishing a contract for an internet connection with a provider.

There is further provided a device included in a vehicle, wherein the billing data is continuously updated following the trajectory, resulting in bill entries and an amount to be paid, in particular wherein upon receiving clearance of the amount to be paid, the executable operations also comprise arranging payment of each of the bill entries.

There is further provided a device included in a vehicle, wherein the optimized internet connection comprises at least one of a proposal for an adapted trajectory, a selection from available communication networks, a selection from available internet service providers, and a combination thereof.

One or more devices or computing devices may be used in the embodiments. A device may include any machine for automatically executing calculations or instructions.

In particular, a device or computing device may refer to any type of data processing hardware and may encompass all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computing device may include personal computer, an edge server, a smart phone, a tablet, a router, an network access point, a server system, a cloud server system, a (locally) distributed server environment, a computer cloud environment or any circuitry for performing particular functions in an electronic device.

A computing device for implementing machine learning models can also include, for example, special-purpose hardware accelerator units for processing common and compute-intensive parts of machine learning training or production, e.g., inference, workloads.

The computing device may be configured to identify patterns using the machine learning algorithm to optimize internet traffic in relation to availability/connectivity, bandwidth, costs, or a combination thereof.

The computing device can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a client device, e.g., for purposes of displaying data to and receiving user input from a user interacting with the device, which acts as a client. Data generated at the client device, e.g., a result of the user interaction, can be received at the server from the device. A computing device may be acting as a server when transmitting data or responding to a request from a client, and the same computing device may also be acting as a client when receiving data or committing a request to a server.

A remote device interacts with other devices, in particular server systems, through a communication network.

To that end, there is provided a server system adapted to provide an optimized internet connection for a remote device moving along a trajectory, comprising:
- a computer-readable storage medium having computer-readable code comprising program executable operations embodied therewith;
- a processor, preferably a microprocessor, coupled to the computer-readable storage medium, and
wherein responsive to executing the computer-readable program code, the processor is configured to perform the executable operations comprising:
- receiving data about a position concerning the remote device, providing position data;
- receiving data about a quality of at least one communication network for connecting the remote device to Internet, providing network data;
- receiving data about the trajectory, including a destination, providing trajectory data;
- processing the position data, the network data, and the trajectory data, into a connection function;
- optimizing the connection function, and
- based on an optimized connection function, providing the optimized internet connection.

There is further provided a server system adapted to provide an optimized internet connection for a remote device, wherein the remote device is included in a vehicle having the trajectory, and the vehicle provides vehicle data, and the processing also comprises processing the vehicle data.

There is further provided a server system adapted to provide an optimized internet connection for a remote device, wherein the executable operations also comprise receiving data about costs of using the at least one communication network for connecting the remote device to Internet, providing billing data, and the processing also comprises processing the billing data.

There is further provided a server system adapted to provide an optimized internet connection for a remote device, wherein the executable operations also comprise receiving data about internet connection preferences, providing preference data, and the processing also comprises processing the preference data.

There is further provided a server system adapted to provide an optimized internet connection for a remote device, wherein the executable operations also comprise receiving data about internet usage of at least one client device that is operational coupled to the remote device, providing usage data, and the processing also comprises processing the usage data.

There is further provided a server system adapted to provide an optimized internet connection for a remote device, wherein the executable operations also comprise receiving data about at least one application using an internet connection and running on at least one client device that is operational coupled to the remote device, providing application data, and the processing also comprises processing the application data.

There is further provided a server system adapted to provide an optimized internet connection for a remote device, wherein the executable operations also comprise receiving data about atmospheric conditions along the trajectory, providing atmospheric data, and the processing also comprises processing the atmospheric data.

There is further provided a server system adapted to provide an optimized internet connection for a remote device, wherein the optimizing comprises establishing a contract for an internet connection with a provider.

There is further provided a server system adapted to provide an optimized internet connection for a remote device included in a vehicle having a trajectory, wherein the billing data is continuously updated following the trajectory, resulting in bill entries and an amount to be paid, in particular wherein upon receiving clearance of the amount to be paid, the executable operations also comprise arranging payment of each of the bill entries.

There is further provided a server system adapted to provide an optimized internet connection for a remote device included in a vehicle having a trajectory, wherein the optimized internet connection comprises at least one of a proposal for an adapted trajectory, a selection from available communication networks, a selection from available internet service providers, and a combination thereof.

There is further provided a server system adapted to provide an optimized internet connection for a remote device, wherein the at least one communication network for connecting the device to Internet comprises at least one of a satellite network, a cellular radio network (e.g. 4G, 5G or next generation), a Wi-Fi network, and a combination thereof.

There is further provided a server system adapted to provide an optimized internet connection for a remote device, wherein the server system is providing a series of optimized internet connections through a plurality of low orbit and/or medium orbit satellites.

There is further provided a server system adapted to provide an optimized internet connection for a remote device, that further is configured to connect to at least one internet service provider, wherein the processor is configured to perform executable operations comprising retrieving connection information from the at least one internet service provider, the connection information comprising in particular information about a quality of internet service and/or cost of internet service provided by the at least one internet service provider, and further processing this retrieved connection information into the connection function.

There is further provided a server system adapted to provide an optimized internet connection for a remote device, wherein the position data comprises at least one of a height above an earth's surface, a change of height above the earth's surface, geographical position, change of geographical positions, and a combination thereof.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them.

Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

A computer program product, which may also be referred to or described as a computer program, a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program product can be deployed to be executed on one computing device or on multiple computing devices that are located at one site or distributed across multiple sites and interconnected by a data communication network.

The processing a computer program product may result in outputting or setting, and result in one or more changes of values, configurations, or settings.

To that end, there is provided a computer program product for setting an optimized internet connection for a device moving along a trajectory, the computer program product when running on a processor, preferably a microprocessor, performing:
- receiving data about a position concerning the device, providing position data;
- receiving data about a quality of at least one communication network for connecting the device to Internet, providing network data;
- receiving data about the trajectory, including a destination, providing trajectory data;
- processing the position data, the network data, and the trajectory data, into a connection function;
- optimizing the connection function, and
- based on an optimized connection function, setting the optimized internet connection.

There is further provided a computer program product for optimizing an internet connection for a device, wherein the device is included in a vehicle having the trajectory, and the vehicle provides vehicle data, and the processing also comprises processing the vehicle data.

There is further provided a computer program product for optimizing an internet connection for a device, wherein the computer program product is providing a series of optimized internet connections through a plurality of low orbit and/or medium orbit satellites.

There is further provided a computer program product for optimizing an internet connection for a device, wherein the at least one communication network for connecting the device to Internet comprises at least one of a satellite network, a cellular radio network (e.g. 4G, 5G or next generation), a Wi-Fi network, and a combination thereof.

There is further provided a computer program product for optimizing an internet connection for a device, wherein the executable operations also comprise receiving data about costs of using the at least one communication network for connecting the device to Internet, providing billing data, and the processing also comprises processing the billing data.

There is further provided a computer program product for optimizing an internet connection for a device, wherein the executable operations also comprise receiving data about internet connection preferences, providing preference data, and the processing also comprises processing the preference data.

There is further provided a computer program product for optimizing an internet connection for a device, wherein the executable operations also comprise receiving data about internet usage of at least one client device that is operational coupled to the device, providing usage data, and the processing also comprises processing the usage data.

There is further provided a computer program product for optimizing an internet connection for a device, wherein the executable operations also comprise receiving data about at least one application using an internet connection and running on at least one client device that is operational coupled to the device, providing application data, and the processing also comprises processing the application data.

There is further provided a computer program product for optimizing an internet connection for a device, wherein the executable operations also comprise receiving data about atmospheric conditions along the trajectory, providing atmospheric data, and the processing also comprises processing the atmospheric data.

There is further provided a computer program product for optimizing an internet connection for a device, that further is configured to connect to at least one internet service provider, wherein the processor is configured to perform executable operations comprising retrieving connection information from the at least one internet service provider, the connection information comprising in particular information about a quality of internet service and/or cost of internet service provided by the at least one internet service provider, and further processing this retrieved connection information into the connection function.

There is further provided a computer program product for optimizing an internet connection for a device, wherein the position data comprises at least one of a height above an earth's surface, a change of height above the earth's surface, geographical position, change of geographical positions, and a combination thereof.

There is further provided a computer program product for optimizing an internet connection for a device, wherein the optimizing comprises establishing a contract for an internet connection with a provider.

There is further provided a computer program product for optimizing an internet connection for a device wherein the device is included in a vehicle, and wherein the billing data is continuously updated following the trajectory, resulting in bill entries and an amount to be paid, in particular wherein upon receiving clearance of the amount to be paid, the executable operations also comprise arranging payment of each of the bill entries.

There is further provided a computer program product for optimizing an internet connection for a device wherein the device is included in a vehicle, and wherein the optimized internet connection comprises at least one of a proposal for an adapted trajectory, a selection from available communication networks, a selection from available internet service providers, and a combination thereof.

There is further provided a computer program product for optimizing an internet connection for a device, wherein the device is a remote device.

In a further example, a supplier of mobile internet connections (e.g., an internet service provider (ISP), any mobile operator that provides mobile internet services, or a related agent, or a distribution partner) reports that a customer's monthly allowance for data traffic has been used. The customer will not be able to get an insight of what has caused his data traffic usage. Moreover, he will typically stay in the dark about the correct metering of his usage. The supplier of internet connections lacks the tools to inform their customers.

Depending on where a mobile internet connection and how a mobile internet is to be provided (satellite, radio antenna) different communications service providers (CSP) and internet service providers (ISP) are involved. An internet connection will typically comprise a connection chain, or supply chain, connecting different hardware (routers/modems/bridges), and using multiple protocols and connectivity technologies.

Distribution partners provide value added services (VAS) to their customers. They tunnel their customers' internet traffic through their own server, typically a proxy server. This allows distribution partners to apply connection preferences including rate limiting, blocking certain applications and (web) services, routing internet traffic to a certain country and other connection preferences. In addition, distribution partners can provide billing for internet usage.

In an aspect of the invention, suppliers of internet connections, in particular distribution partners, can report in detail to their customers about their mobile internet usage. In an embodiment, details of an internet connection reveal the (type of) connected application, the kind of data (e.g., streaming data or messages), the network data and QoS, the communications service provider, and the location during the mobile internet usage.

As a result, customers can be better informed. And, in particular distribution partners can improve their value added services (VAS) by applying details of a mobile internet connection for services such as filtering and routing certain content, and providing advice for more efficiently use the internet (e.g., upgrade to another subscription plan).

Hence, it is an aspect of the invention to provide an improved and/or alternative method to collect data concerning a usage of mobile internet connections.

To that end, there is provided a method for providing data concerning usage of a mobile internet connection, comprising:
- collecting data from data sources related to the mobile internet connection, and its connection chain, including a series of network metrics;
- processing the collected data through a dedicated data source processor for each data source;
- enriching and correlating processed data, including data from Operational Support Systems and Business Support Systems (OSS/BSS), and
- providing the enriched and correlated data as the data concerning the usage of the mobile internet connection.

There is further provided a method for providing data concerning usage of a mobile internet connection, wherein the data sources comprise at least one of (ISP) assurance data, (ISP) billing data, position data, atmospheric condition data including weather data, and a combination thereof.

An internet service provider (ISP) is generic term for a provider that manages at least a part of a connection chain, or supply chain, for providing an internet connection or internet services. An ISP typically charges its customers for usage of a connection or service.

There is further provided a method for providing data concerning usage of a mobile internet connection, wherein collecting the data comprises at least one of SYSLOG, NetFlow, IPFIX, sFlow, jFlow Export, and a combination thereof.

There is further provided a method for providing data concerning usage of a mobile internet connection, wherein the dedicated data source processors comprise at least one of a network data processor, an assurance and performance data processor, a billing data processor, a position data processor, and a combination thereof.

There is further provided a server system for providing data concerning usage of a mobile internet connection, comprising:
- a computer-readable storage medium having computer-readable code comprising program executable operations embodied therewith;
- a processor, preferably a microprocessor, coupled to the computer-readable storage medium, and wherein responsive to executing the computer-readable program code, the processor is configured to perform the executable operations comprising:

- collecting data from data sources related to the mobile internet connection, and its connection chain, including a series of network metrics;
- processing the collected data through a dedicated data source processor for each data source;
- enriching and correlating processed data, including data from Operational Support Systems and Business Support Systems (OSS/BSS), and
- providing the enriched and correlated data as the data concerning the usage of the mobile internet connection.

There is further provided a server system for providing data concerning usage of a mobile internet connection, wherein the data sources comprise at least one of (ISP) assurance data, (ISP) billing data, position data, atmospheric condition data including weather data, and a combination thereof.

There is further provided a server system for providing data concerning usage of a mobile internet connection, wherein collecting the data comprises at least one of SYSLOG, NetFlow, IPFIX, sFlow, jFlow Export, and a combination thereof.

There is further provided a server system for providing data concerning usage of a mobile internet connection, wherein the dedicated data source processors comprise at least one of a network data processor, an assurance and performance data processor, a billing data processor, a position data processor, and a combination thereof.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, a router, an (internet) access point, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

Embodiments of the subject matter described in this specification can be implemented in a computing device that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment.

Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

As will be appreciated by one skilled in the art, aspects of the present invention may be embodied as a system, method or computer-readable program code comprising program instructions embodied therewith providing a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer-readable medium(s) having computer-readable program code embodied, e.g., stored, thereon.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

The term "substantially", if used, will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of".

The term "functionally" will be understood by, and be clear to, a person skilled in the art. The term "substantially" as well as "functionally" may also include embodiments with "entirely", "completely", "all", etc. Hence, in embodiments the adjective functionally may also be removed. When used, for instance in "functionally parallel", a skilled person will understand that the adjective "functionally" includes the term substantially as explained above. Functionally in particular is to be understood to include a configuration of features that allows these features to function as if the adjective "functionally" was not present. The term "functionally" is intended to cover variations in the feature to which it refers, and which variations are such that in the functional use of the feature, possibly in combination with other features it relates to in the invention, that combination of features is able to operate or function. For instance, if an antenna is functionally coupled or functionally connected to a communication device, received electromagnetic signals that are receives by the antenna can be used by the communication device. The word "functionally" as for instance used in "functionally parallel" is used to cover exactly parallel, but also the embodiments that are covered by the word "substantially" explained above. For instance, "functionally parallel" relates to embodiments that in operation function as if the parts are for instance parallel. This covers embodiments for which it is clear to a skilled person that it operates within its intended field of use as if it were parallel.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer-readable medium(s) having computer-readable program code embodied, e.g., stored, thereon.

The various aspects discussed in this patent can be combined in order to provide additional advantages. Furthermore, some of the features can form the basis for one or more divisional applications.

The invention will be further illustrated with reference to the attached drawings, which schematically will show embodiments according to the invention. It will be understood that the invention is not in any way restricted to these specific embodiments.

### Brief description of the drawings

Embodiments of the invention will now be described, by way of example only, with reference to the accompanying schematic drawings in which corresponding reference symbols indicate corresponding parts, and in which:
FIG 1 depicts an example of an embodiment of a device in an airplane, adapted to provide an optimized internet connection.
FIG 2 depicts a simplified diagram of an embodiment of a device adapted to provide an optimized internet connection.
FIG 3 depicts an example of an embodiment of a server system adapted to provide an optimized internet connection.
FIG 4 depicts a simplified diagram of an embodiment of a server system adapted to provide an optimized internet connection.
FIG 5 depicts an embodiment of a connection chain, or supply chain, and a server system providing data concerning usage of a mobile internet connection.
FIG 6 depicts a flow chart of an example method for collecting, processing, enriching and correlating, and providing data concerning usage of a mobile internet connection.
FIG 7 depicts an example of an embodiment of a server system for providing data concerning usage of a mobile internet connection.

The drawings are not necessarily on scale.

### Description of preferred embodiments

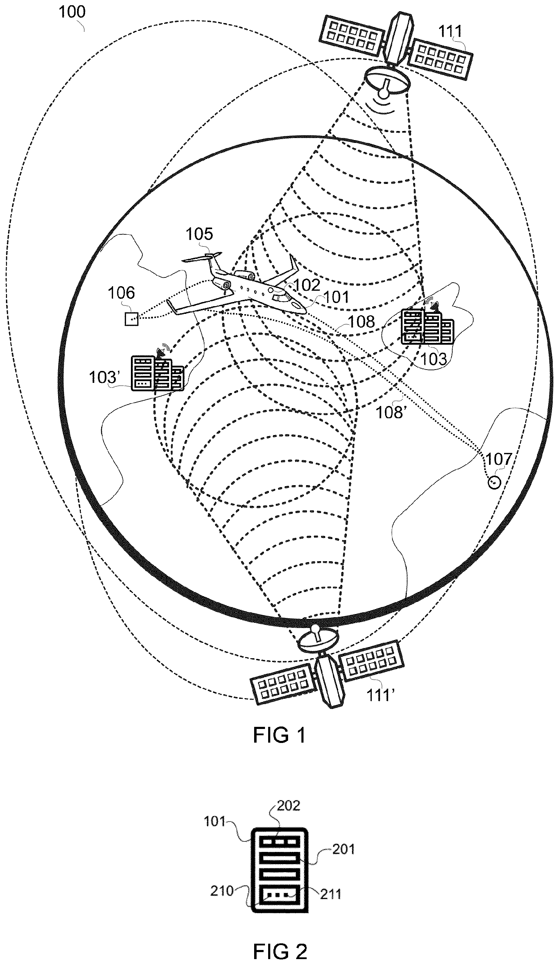

FIG 1 depicts an example **100** of an embodiment of a device **101** in an airplane **105**, adapted to provide an optimized internet connection, during a flight from a start location **106** to an end location **107**, along a trajectory **108.** A client device **102** (e.g., a smartphone or a tablet) has a wired or wireless connection to device **101** that provides an optimized internet connection. At first device **101** provides an internet connection through communication network of satellite provider **103'** operating satellite **111'.** During the flight the device **101** executes computer-readable program code that receives data about a position of the device **101** or the airplane **105**, and receives network data from another communication network of satellite provider **103**, and receives data about the trajectory **108.** The computer-readable program code processes the received data into a connection function. By optimizing the connection function, the device **101** changes during the flight from communication network of satellite provider **103'** to communication network of satellite provider **103** operating satellite **111** in order to provide the optimized internet connection.

In a further example, the device **101** might not change to the other communication network of satellite provider **103**, but instead, as result of processing computer-readable program code, the airplane **105** might adapt its route to an alternative trajectory **108'**

In a further example, the device **101** causes a simultaneous, or nearly simultaneous, use of both communication networks, operated by satellite provider **103** and satellite provider **103'**, in order to provide an optimized internet connection with the highest throughput.

In a furthermore example, the device **101** is not connected to a client device **102**, and the device **101** is part of a satellite (smart) phone or is embodied in another device, such as a navigation device.

FIG 2 depicts a simplified diagram of an embodiment of a device **101** adapted to provide an optimized internet connection. The device **101** has a computer-readable storage medium **201** having computer-readable program code comprising executable operations embodied therewith. The device **101** has a processor **202**, preferably a microprocessor, and comprises at least one input **210** for a wireless connection, to support a mobile internet connection.

In an embodiment the at least one input **210** of device **101** is connected to an antenna or a satellite dish.

In further embodiment, device **101** comprises at least one wired or wireless network port **211** that may provide an internet connection to a local network for example in airplane **105** or on a boat **505.**

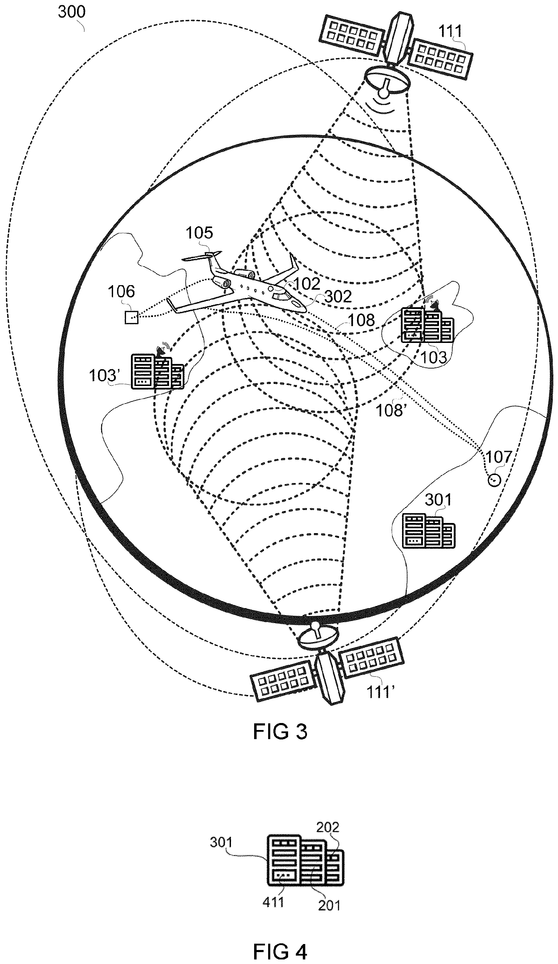

FIG 3 depicts an example **300** of an embodiment of a server system **301**, adapted to provide an optimized internet connection for a remote device **302** in an airplane **105**, during a flight from a start location **106** to an end location **107**, along a trajectory **108.** A client device **102** (e.g., a smartphone or a tablet) has a wired or wireless connection to remote device **302** that provides an optimized internet connection that is being provided by a server system **301.** The trajectory **108** has been set to provide the most optimal internet connection. The remote device **302** is connected to the server system **301** through a communication network of satellite provider **103** operating satellite **111.** During the flight the server system **301** executes computer-readable program code that receives data about a position of the remote device **302** or the airplane **105**, and receives network data from communication network of satellite provider **103**, and receives data about the trajectory **108.** The computer-readable program code processes the received data into a connection function.

Due to a deteriorating network connection with satellite **111** -for instance the number retries for sending a data package increases-, server system **301** optimizes the connection function and provides an adapted trajectory **108'** for airplane **105** in order to improve the connection with satellite **111** and provide the optimized internet connection.

In a further example, the remote device **302** is connected to a proxy server provided by server system **301.**

In a further example, the server system **301** is limiting the use of an internet connection to a message application.

In a further example, the server system **301** initiates a connection handover from a communication network of satellite provider 103 to a communication network of satellite provider **103'**, or causes remote device **302** to use simultaneously, or nearly simultaneously, both communication networks, operated by satellite provider **103** and satellite provider **103'**, in order to provide an optimized internet connection with the highest throughput.

In a further example when airplane **105** is near an airport **507**, the server system **301** initiates a connection handover from a communication network of satellite provider 103 to a communication network of 4G/5G provider **502**, in order to provide an optimized internet connection.

In a furthermore example, the remote device **302** is not connected to a client device **102**, and the device remote device **302** is part of a satellite (smart) phone or is embodied in another device, such as a navigation device.

FIG 4 depicts a simplified diagram of an embodiment of a server system **301** adapted to provide an optimized internet connection. The server system **301** has a computer-readable storage medium **201** having computer-readable program code comprising executable operations embodied therewith. The device **301** has a processor **202**, preferably a microprocessor, and comprises at least one network port **411** for a connection to a wide area network (WAN), to support a mobile internet connection.

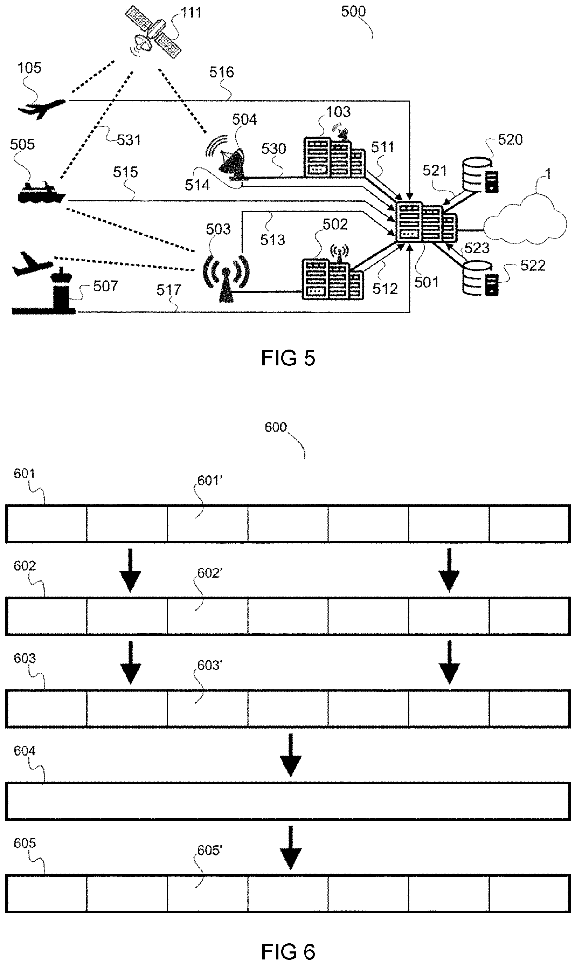

FIG 5 depicts an embodiment of an embodiment of a connection chain, or supply chain, **500** comprising various wireless (**531**, depicted as dash lines) and wired (**530**, depicted as solid lines) connections, and a server system **301** receiving data (**516**, **515**, **517**, **514**, **513**, **511**, **512**, **521**, and **523**) originating from multiple data sources (**105**, **505**, **507**, **504**, **503**, **103**, **502**, **520**, and **522**) depicted as lines with an arrow, in order to provide a mobile connection to Internet 1 from an airplane **105**, from a boat **505**, and from airplane near an airport **507.**

A data source for server system **501** is originating from an airplane **105** with a connection to a satellite **111**, may provide data **516**, including data such as position information and onboard terminal performance metrics.

A data source for server system **501** is originating from a boat **505** with a connection to a satellite **111** and, when near a coast, with a connection to a 4G/5G provider antenna **503**, may provide data **515**, including data such as position information and onboard terminal performance metrics.

A data source for server system **501** is originating from an airport **505** with a connection to a 4G/5G provider antenna **503**, may provide data **517**, including data such as traffic control information and flight plans.

A data source for server system **501** is originating from a satellite provider ground station **504** operated by satellite provider **103**, may provide data **514**, including data such as call data records (CDR), satellite performance metrics, position/location information and provisioning information.

A data source for server system **501** is originating from a 4G/5G provider antenna **503** operated by 4G/5G provider **502**, may provide data **513**, including data such as call data records (CDR), 4G/5G performance metrics, position/location information and provisioning information.

A data source for server system **501** is originating from a satellite provider **103**, may provide data **511**, including data such as comprised in a user traffic handover.

A data source for server system **501** is originating from a 4G/5G provider **502**, may provide data **512**, including data such as comprised in a user traffic handover.

A data source for server system **501** is originating from one or more OSS/BSS systems **520**, may provide data **521**, including data such as customer information, provisioning information, usage and billing information from satellite and 4G/5G providers.

A data source for server system **501** is originating from one or more third party data sources **522**, may provide data **523**, including data such automatic Dependent Surveillance-Broadcast (ADS-B) information, aircraft model information, flight plans, atmospheric condition information, Automatic Identification System (AIS), boat (or ship/vessel) model information.

Each provider in a connection chain, or supply chain chooses its own supplier of technology that might or might not provide useful data concerning a mobile internet connection. If a provided data is useful then a structure of data will differ depending on a technology and so will a method to retrieve data. In addition, a terminology or value units may differ depending on a technology. A simple example would be that some providers provide altitude in feet and others in meters. As will be clear to the person skilled in the art a method as depicted in a flow chart of FIG 6 provides data concerning usage of a mobile internet connection originating from various data sources and different technologies.

FIG 6 depicts a flow chart of an example method **600** for collecting (layer **602**), processing (layer **603**), enriching and correlating (layer **604**), and providing data (layer **605**) that relates to a mobile internet connection. Data from a data source layer **601** flows to a data provision layer **605** in order to provide data related to a mobile internet connection.

For example, such data may comprise mobile internet connection preferences, position of a connecting device, quality of a communication network, costs of using a internet connection, among other data from data sources that may be relevant to monitor/troubleshoot and/or to optimize an internet connection. The method **600** may include one or more operations, functions, or actions as illustrated by one or more of blocks **601-605.** Although the blocks are illustrated in a sequential order, these blocks may in some instances be performed in parallel. Also, the various blocks may be combined into fewer blocks, divided into additional blocks, and/or removed based upon the desired implementation.

In addition, for the method **600** and other processes and methods disclosed herein, the flow chart shows functionality and operation of one possible implementation of present embodiments. In this regard, each block may represent a module, a segment, or a portion of program code, which includes one or more instructions executable by a processor, preferably a microprocessor (**202** or **202'**), for implementing specific logical functions or steps in the process. The computer program product may be stored on any type of computer-readable storage medium or memory **201**, for example, such as a storage device including a disk or hard drive.

In addition, for the method **600** and other processes and methods disclosed herein, each block in FIG 6 may represent circuitry that is wired to perform the specific logical functions in the process. For the sake of example, the method **600** shown in FIG 6 has been described as implemented by a computer program product. The method **600** can also be described as implemented by a device, or server system, or computing device, or computer device, or computer system. Therefore, the terms "computer program product", "device", "server system", "computing device", "computer device", "computer system", and can be interchangeable herein. It should be understood that other entities or combinations of entities can implement one or more steps of the example method **600.**

FIG 6 depicts in schema **600**, how data from a data source layer **601** comprising one or more data sources **601'** such as modem/router metrics, ISP assurance data, ISP billing data, OSS/BSS* data, network data including network quality data, location data e.g., ADSB/AIS, atmospheric condition data including weather data, and other connection relevant data.

### *Operational Support Systems/Business Support Systems.

The data from the data source layer **601** can be collected through a data collector layer **602** comprising one or more data collector methods **602'** for standards such SYSLOG, NetFlow, IPFIX, sFlow, jFlow Export, and other connection relevant collector methods. In addition, technologies such as API, JSON/SOAP/GraphQL may be applied to collect data through secure connections using encrypting (e.g., VPN, SSH, SFTP, HTTPS) to for example connect to cloud storage (e.g., AWS Buckets)

The data from the data collector layer **602** can be an input for a data source processor layer **603** comprising one or more data source processors **603'** such as a network data processor, assurance and performance data processor, billing data source processor, position/location data source processor, and other connection relevant processors.

All data that are processed by the data source processor layer **603** will then be enriched and correlated in a data enrich layer **604**. For example, a customer ID can be correlated to an application detection event ID, and can be enriched with weather data from a specific flight from AMS to NYC.

The data from the data enrich layer **604** is input for a data provision layer **605** comprising one or more data provision methods **605'** comprising API's, dashboards and other visualizations, monitoring/troubleshooting tools and auditing tools.

By using data mining and machine learning techniques on the data originating from data source layer **601**, deviations in data and correlations of data can be detected, as well as predictions can be made, which can be used for (pre-emptive) actions such changing a network connection (e.g. change from satellite **111** to **111'**) , changing an internet- or communications provider, and/or changing a route of a vehicle (e.g. change flight path **108** to **108'**), to provide an optimized internet connection.

A single connection flow usually hits multiple devices in the network, for example a traditional firewall and/or a network-based application recognition (NBAR) system and/or application recognition and control (ACR) system. These systems could have different hardware suppliers/brands (e.g., Cisco or Sandvine), have different specifications and support different functionalities. As a result, a data collector and a data source processor need to be able to handle the output from different ecosystems. Currently the most common flow data technology for statistics and monitoring is NetFlow and IPFIX.

In an embodiment a data source processor combines a single connection flow that hits multiple network devices from different suppliers into a single connection flow document instead of multiple documents describing the same connection flow. For example, this single connection flow document can comprise information such as: device information from different brands that the flow hit, application recognition from a Sandvine system and NAT IP address from a Cisco firewall.

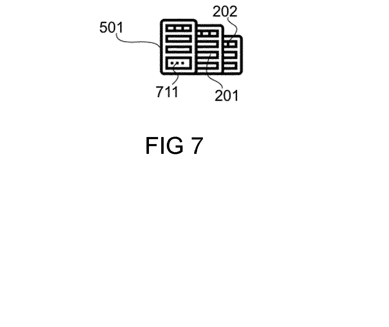

FIG 7 depicts a simplified diagram of an embodiment of a server system **501** providing data concerning usage of a mobile internet connection. The server system **501** has a computer-readable storage medium **201** having computer-readable program code comprising executable operations embodied therewith. The device **501** has a processor **202**, preferably a microprocessor, and comprises at least one network port **711** for a connection to a wide area network (WAN), to collect data concerning usage of a mobile internet connection.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Starting from this disclosure, many more embodiments will be evident to a skilled person. These embodiments are within the scope of protection and the essence of this invention and are obvious combinations of prior art techniques and the disclosure of this patent.

## Claims

1. A device adapted to provide an optimized internet connection while moving along a trajectory, comprising:
- a computer-readable storage medium having computer-readable program code comprising executable operations embodied therewith;
- a processor, preferably a microprocessor, coupled to the computer-readable storage medium, and
wherein responsive to executing the computer-readable program code, the processor is configured to perform the executable operations comprising:
- receiving data about a position concerning the device, providing position data;
- receiving data about a quality of at least one communication network for connecting the device to Internet, providing network data;
- receiving data about the trajectory, including a destination, providing trajectory data;
- processing the position data, the network data, and the trajectory data, into a connection function;
- optimizing the connection function, and
- based on an optimized connection function, providing the optimized internet connection.

2. The device according to claim 1, wherein the device is included in a vehicle having the trajectory, and the vehicle provides vehicle data, and the processing also comprises processing the vehicle data.

3. The device according to claim 1 or 2, wherein the device is providing a series of optimized internet connections through a plurality of low orbit and/or medium orbit satellites.

4. A server system adapted to provide an optimized internet connection for a remote device moving along a trajectory, comprising:
- a computer-readable storage medium having computer-readable code comprising program executable operations embodied therewith;
- a processor, preferably a microprocessor, coupled to the computer-readable storage medium, and
wherein responsive to executing the computer-readable program code, the processor is configured to perform the executable operations comprising:
- receiving data about a position concerning the remote device, providing position data;
- receiving data about a quality of at least one communication network for connecting the remote device to Internet, providing network data;
- receiving data about the trajectory, including a destination, providing trajectory data;
- processing the position data, the network data, and the trajectory data, into a connection function;
- optimizing the connection function, and
- based on an optimized connection function, providing the optimized internet connection, wherein in particular the executable operations also comprise receiving data about costs of using the at least one communication network for connecting the remote device to Internet, providing billing data, and the processing also comprises processing the billing data, and/or wherein the remote device is included in a vehicle having the trajectory, and the vehicle provides vehicle data, and the processing also comprises processing the vehicle data.

5. The server system according to claim 4, wherein the executable operations also comprise receiving data about internet connection preferences, providing preference data, and the processing also comprises processing the preference data.

6. The server system according to any one of claims 4-5, wherein the executable operations also comprise receiving data about internet usage of at least one client device that is operational coupled to the remote device, providing usage data, and the processing also comprises processing the usage data.

7. The server system according to any one of claims 4-6, wherein the executable operations also comprise receiving data about at least one application using an internet connection and running on at least one client device that is operational coupled to the remote device, providing application data, and the processing also comprises processing the application data.

8. The server system according to any one of claims 4-7, wherein the executable operations also comprise receiving data about atmospheric conditions along the trajectory, providing atmospheric data, and the processing also comprises processing the atmospheric data.

9. The server system according to any one of claims 4-8, wherein the optimizing comprises establishing a contract for an internet connection with a provider, wherein in particular the optimized internet connection comprises at least one of a proposal for an adapted trajectory, a selection from available communication networks, a selection from available internet service providers, and a combination thereof.

10. The server system according to claim 4, wherein the billing data is continuously updated following the trajectory, resulting in bill entries and an amount to be paid, in particular wherein upon receiving clearance of the amount to be paid, the executable operations also comprise arranging payment of each of the bill entries.

11. A computer program product for setting an optimized internet connection for a device moving along a trajectory, the computer program product when running on a processor, preferably a microprocessor, performing:
- receiving data about a position concerning the device, providing position data;
- receiving data about a quality of at least one communication network for connecting the device to Internet, providing network data;
- receiving data about the trajectory, including a destination, providing trajectory data;
- processing the position data, the network data, and the trajectory data, into a connection function;
- optimizing the connection function, and
- based on an optimized connection function, setting the optimized internet connection,
wherein in particular the device is included in a vehicle having the trajectory, and the vehicle provides vehicle data, and the processing also comprises processing the vehicle data, and/or wherein in particular the computer program product is providing a series of optimized internet connections through a plurality of low orbit and/or medium orbit satellites.

12. A method for providing data concerning usage of a mobile internet connection, comprising:
- collecting data from data sources related to the mobile internet connection, and its connection chain, including a series of network metrics;
- processing the collected data through a dedicated data source processor for each data source;
- enriching and correlating processed data, including data from Operational Support Systems and Business Support Systems (OSS/BSS), and
- providing the enriched and correlated data as the data concerning the usage of the mobile internet connection,
wherein in particular the data sources comprise at least one of (ISP) assurance data, (ISP) billing data, position data, atmospheric condition data including weather data, and a combination thereof, and/or wherein in particular collecting the data comprises at least one of SYSLOG, NetFlow, IPFIX, sFlow, jFlow Export, and a combination thereof.

13. The method of claim 12, wherein the dedicated data source processors comprises at least one of a network data processor, an assurance and performance data processor, a billing data processor, a position data processor, and a combination thereof.

14. A server system for providing data concerning usage of a mobile internet connection, comprising:
- a computer-readable storage medium having computer-readable code comprising program executable operations embodied therewith;
- a processor, preferably a microprocessor, coupled to the computer-readable storage medium, and
wherein responsive to executing the computer-readable program code, the processor is configured to perform the executable operations comprising:
- collecting data from data sources related to the mobile internet connection, and its connection chain, including a series of network metrics;
- processing the collected data through a dedicated data source processor for each data source;
- enriching and correlating processed data, including data from Operational Support Systems and Business Support Systems (OSS/BSS), and
- providing the enriched and correlated data as the data concerning the usage of the mobile internet connection.

15. The server system of claim 14, wherein the data sources comprise at least one of (ISP) assurance data, (ISP) billing data, position data, atmospheric condition data including weather data, and a combination thereof, wherein in particular collecting the data comprises at least one of SYSLOG, NetFlow, IPFIX, sFlow, jFlow Export, and a combination thereof, and/or wherein in particular the dedicated data source processors comprise at least one of a network data processor, an assurance and performance data processor, a billing data processor, a position data processor, and a combination thereof.
